# EUROPEAN PATENT APPLICATION

(11) **EP 1 755 242 A2**
(43) Date of publication of application: **21.02.2007**
(21) Application number: 06254287.3
(22) Date of filing: 16.08.2006
(51) Int. Cl.: H04B 11/00

(54) **Data transmission by means of audible sound waves**

(30) Priority: 16.08.2005 GB 0516794
(71) Applicant: Vodafone Group PLC, Newbury Berkshire RG14 2FN (GB)
(72) Inventor: Haynes, Christopher J., Eastleigh, Hampshire SO53 5PX (GB)
(74) Representative: Foster, Mark Charles

(57) **Abstract**

A device 3 for transmitting data by means of an audible sound wave is disclosed. The device generates or receives data to be transmitted. The device also measures the ambient noise level. The device produces a sound wave that is modulated by the data and adjusted to be unobtrusive with respect to the ambient noise level. The device then transmits the sound wave. The sound wave is received by a corresponding receiver, which extracts the data. Because the data is transmitted as an audible sound wave, it is transmitted only for a limited range (for example, it is confined within the boundaries of a room). This may enhance security and be advantageous in certain applications, for example those where it is desired to ensure that a recipient is within a particular predefined area.

## Description

The present invention relates to the transmission of data by means of an audible sound wave. The invention also relates to the reception of data transmitted by such a sound wave and to systems including devices capable of such transmission and reception. The embodiments to be described are concerned with transmitting data for only a limited distance - for example, confined within a room or other defined volume.

There are various known arrangements for transmitting data for a limited range. These arrangements include infra-red data transmission, ultrasonic data transmission and radio data transmission.

The infra-red data transmission typically requires the receiver and transmitted to have a line-of-sight path between them. Also, sunlight and other light sources can interfere with infra-red data transmission. Further, infra-red radiation can pass through glass and so typically is not confined by room boundaries.

Ultrasonic data transmission is an alternative arrangement. A disadvantage of this arrangement is that specialised hardware is required for the receiver to detect and interpret the ultrasonic sound.

Radio data transmission also requires specialised hardware, and is further disadvantageous because it is not normally constrained by room boundaries.

According to a first aspect of the present invention, there is provided a device for transmitting data by means of an audible sound wave, the device comprising means for receiving the data to be transmitted; means for measuring the ambient noise level; means for producing a sound wave that is modulated by the data and adjusted to be unobtrusive with respect to the ambient noise level; and means for transmitting the sound wave.

An "audible sound wave" is, for example, a sound wave that can be sensed by the human ear, typically in the frequency range 20Hz to 20KHz.

The arrangement to be described in the detailed embodiment below, by way of example, transmits data by means of an audible sound wave so, advantageously, the data is transmitted over a limited range. For example, the transmission of the data can be transmitted such that it is not interpretable by a receiver outside the room in which the transmitter is positioned. Such an arrangement is advantageous if the data is sensitive and it is not desired that it is widely receivable. Also, such an arrangement is advantageous if it is desired for a receiver to determine its location. The data transmitted can be a signal indicative of the identity of the room. It is therefore possible for the receiving device to automatically determine its location. The location of the receiving device at a particular time could be logged and could be used advantageously for tracking purposes or record-keeping purposes.

According to a second aspect of the present invention, there is provided a device for receiving data transmitted by means of an audible sound wave that is unobtrusive with respect to the ambient noise level, the device comprising means for receiving the sound wave and means for extracting the data therefrom.

The invention further provides a mobile or cellular telecommunications terminal adapted to receive an audible sound wave and extract data therefrom.

The invention also provides a method for transmitting data by means of an audible sound wave, the method comprising receiving the data to be transmitted, measuring the ambient noise, and producing a sound wave that is modulated by the data and adjusted to be unobtrusive in respect of the ambient noise level; and transmitting the sound wave.

Preferably, the amplitude of the transmitted sound wave is such that the sound wave is receivable generally only over a short range (for example <6m) or only perceptible in the room in which the device is present. As mentioned above, such an arrangement is advantageous if it is desired that the data is not widely receivable. Further, it is advantageous if the data provides an indication of the identity of the room.

In the embodiment the sound wave generates sound similar to pink noise. Pink noise is a variant of white noise that has been filtered to reduce the volume at each octave. This compensates for the increase in the number of frequencies per octave. Each octave is reduced by six decibels, resulting in a noise sound wave that has equal energy at each octave. The noise is transmitted with more power at low frequencies, to compensate for the relative insensitivity of human hearing to low frequencies.

The data may be transmitted by data spreading in frequency and/or time. This allows the data to be transmitted at a higher rate.

The sound waves generated may be such that they are perceived to people in the vicinity as noise. This advantageously results in the sound wave being unobtrusive, and typically its presence may not be detected at all. In fact, in some modem office environments artificial "noise" is deliberately generated in open-plan working areas because this increases the worker's sense of privacy.

The sound waves generated will generally have a lower amplitude or volume than the ambient noise but are still detectable by a receiver.

Also, sound wave is preferably generated such that it is imperceptible when data is transmitted therein and when data is not transmitted. To the human ear the sound wave will appear to be a constant noise source. If the transmission of data were perceptible, then the sound wave generated would tend to be more obtrusive.

For a better understanding of the present invention, embodiments will now be described by way of example with reference to the accompanying drawings in which:
Figure 1 shows schematically an audible sound wave transmitter and receiver positioned in a room;
Figure 2 shows the elements of a data transmitter; and
Figure 3 shows the elements of a data receiver.

In the drawings like elements are generally designated by the same reference signs.

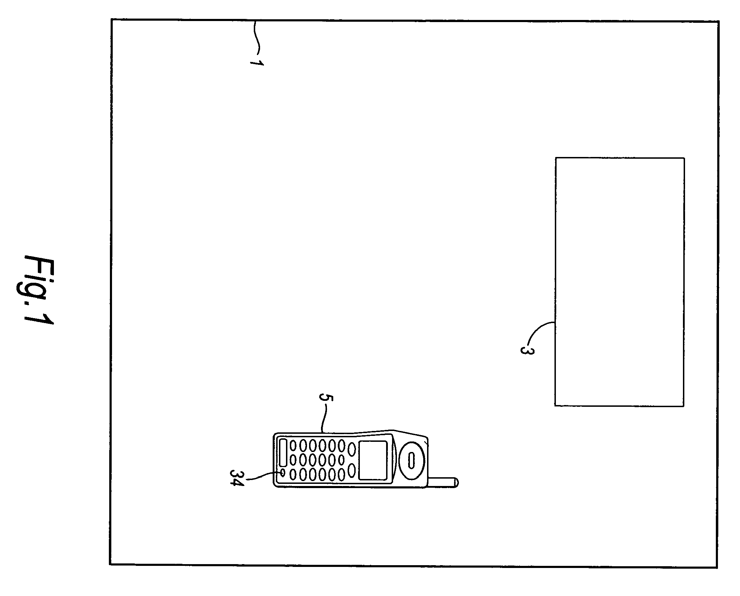

Figure 1 shows a room 1 in which a transmitter 3 and a receiver 5 is located. The transmitter 3 may be fixed in position, and the receiver 5 may be a mobile device, such as a cellular or mobile telephone handset.

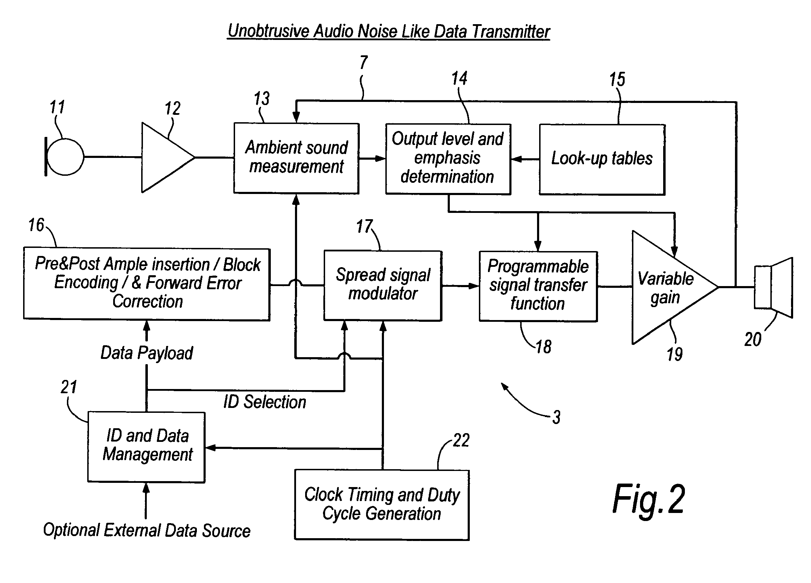

The components of the transmitter 3 are shown in more detail in Figure 2.

The transmitter 3 comprises a microphone 11 and signal converter 12, which feed a signal derived from the ambient sounds to ambient sound measurement module 13. The ambient sound measurement module 13 measures the ambient sound level across respective audio frequency sub-bands. The ambient sound measurement module 13 also receives, via feedback link 7, the output signal of the transmitter 3 (to be described in more detail below). This output signal is compared to the measured ambient sound level by the ambient sound measurement module 13. This allows the output level and emphasis determination module 14, programmable signal transfer function module 18 and variable gain module 19 to control the level of output data signal within the corresponding respective sub-bands by reference to look up tables 15. The look-up tables 15 limit the number of gain and emphasis curves supplied through the programmable transfer function module 18 and the variable gain module 19 to the output loudspeaker/transducer 20. The look up table is indexed by an address generated by concatenating the measured level of noise for each frequency sub-band. The output is the corresponding parameters setting the gain of each frequency sub-band in the programmable signal transfer unit. These modules 14,18,19 cause the output acoustic signal to be unobtrusive compared to the ambient level of sound, even as the ambient sound varies. The acoustic output signal is generated at an amplitude/volume less than that of the measured ambient noise.

Usually, for the majority of the time that sound is transmitted by the transmitter 3, no data is embedded therein, but merely a noise-like signal is generated and reproduced as a sound wave by loudspeaker/transducer 20. This can be referred to as a default code or standby transmission sequence. A similar default code or standby transmission sequence is used by all similar transmitters. An orthogonal code is used to transmit data, which is embedded in the sound wave generated by the loudspeaker/transducer 20. The data are transmitted in blocks and are repeated at irregular intervals.

In the transmitter 3, ID and data management module 21 receives data for transmission from either an external data source or a data source provided as part (not shown) of the transmitter 3. The data is then passed to pre-and post-amble insertion, block encoding and forward error correction module 16. This module 16 generates a data block having the following components:
1. Pre-amble
2. unique ID or identity code of the transmitter 3
3. security code
4. security code sequence number
5. post-amble

The pre-amble and pos-amble data allow for synchronization and detection of an active datablock in the receiver. The security code is generated using a secure algorithm based on shared secret data and the ID and security code sequence number as input. The ID concatenated with the security code and security code sequence number form a key code word. The key code word is either recognised directly in the receiver or is used within a look up to an external database.

The data block generated by the module 16 is passed to spread signal modulator 17, which prepares the data block for transmission by means of data spreading in frequency and time. The spreading function of the spread signal modulator 17 is optimised by code selection to give a spectrum characteristic at the output of the spread signal modulator 17 approximating that of the perceived loudness curve of human hearing (for example as given in ISO 226, hereby fully incorporated by reference). The signal is then passed to the programmable signal transfer function 18 and from there to the variable gain module 19, and finally to the loudspeaker/transducer 20. The output sound waves are perceived as like pink noise.

Clock, timing and duty cycle generation module 22 provides timing signals to the modules 21 and 17.

The output of the spread signal modulator 17 passes to the programmable signal transfer function module 18 and from there to the variable gain module 19. The modules 18 and 19 also receive the output (as mentioned above) of the output level and emphasis determination module 14. The output of module 14 enables the modules 18 and 19 to modify the signal received from the spread signal modulator 17 so that the relative amplitude of each of the audio frequency sub-bands is matched to that of the received ambient sound at microphone 11.

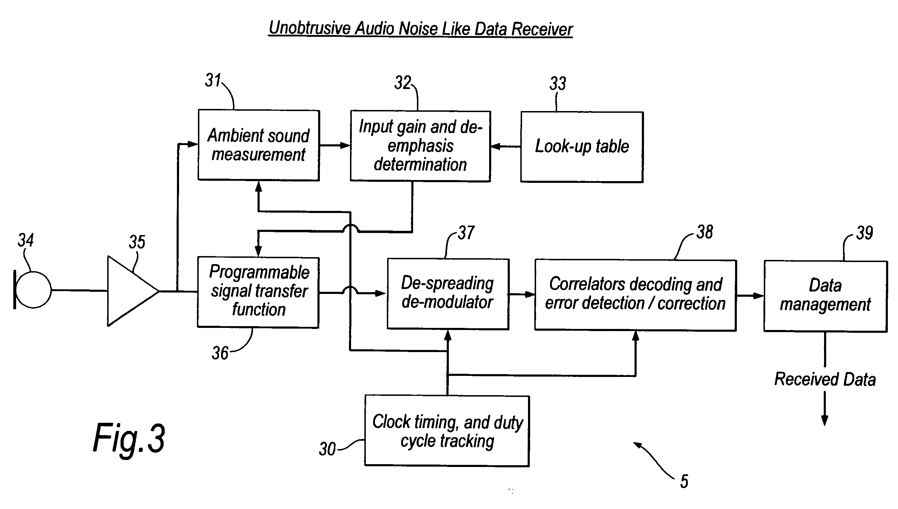

Figure 3 shows the receiver 5.

The receiver 5 measures ambient sound with microphone 34, and preamplifier and signal generator 35 generates a signal derived therefrom. The ambient sound measurement module 31, input gain and de-emphasis determination module 32, look-up table 33 and programmable signal transfer function 36 allows the ambient sound level to be measured across respective audio frequency sub-bands. The look-up table 33 provides data to determine the de-emphasis, most likely to reverse the emphasis applied at the transmitter. This information is passed from the look-up table 33 to the input gain and de-emphasis determination module 32 and from there to the programmable signal transfer function 36 to apply de-emphasis which approximates the inverse of that applied in the transmitter 3. The receiver 5 comprises de-spreading demodulator 37, correlators, decoding and error detection/correction module 38, data management module 39 and clock, timing and duty cycle tracking module 30, which demodulate, decode and output the data blocks from any transmitters within range.

The data can then be used by the receiver 5 or passed on to another device for use by that device.

Typically, the receiver 5 will comprise a cellular or mobile communication device, such as a mobile handset. The microphone 34, and preamplifier and signal converter 35, which generates a (typically amplified and digitised) signal derived from the microphone 34, may advantageously be components already present in a mobile handset of conventional design. The additional modules 30 to 39 shown in Figure 3 can be implemented in such a conventional handset by hardware or software.

As mentioned above, the data blocks received by the receiver 3 may comprise a value indicative of the identity of the room in which the transmitter 3 and receiver (mobile handset) 5 (Figure 1) are located. Thus, the mobile handset may derive the room in which it was located on receipt of the data block. This may allow the calendar function of the mobile handset to record its location as in the identified room during the period that the data block providing an identity indicative of the room is received.

Also, receipt of such a data block could trigger a change in the response of the mobile handset to an incoming call. For example, the handset could be configured to not ring when present in a particular room but instead to provide callers with a message indicating that the user of the mobile handset was busy or at a particular location; for example, the message might be:
"Chris is not currently accepting calls. He is in Vodafone House Meeting Room 15, his diary has the entry 'Programme Review meeting' associated with this room at this time"

Such a message may only be provided to selected (trusted) parties.

Another use of this room identity information is automatic recording of attendees at meetings, such as:
"Your life recorder lists the following people as being present at the meeting you attended between 09:05 and 12:36 on the 18th May in the room identified as 'Vodafone House Meeting Room 15': Chris Haynes, Patrick Waters (09:05-12:36), Trevor Gill (10:30-12:10), Nigel Jefferies (11:12-12:13). Your diary has the entry 'Programme Review meeting' associated with this room at this time"

Room or location identity information can also provide metadata for picture/audio/video recording: When one takes a picture with a receiver 3-enabled camera, the camera records any information from proximate transmitters 5 in the metadata header of the picture.

Tracking of personal assets can also be performed if these are provided with a transmitter 3.

Asset tracking for testing or certification could also be performed to generate messages such as: "Your current location is identified as 'Vodafone House Meeting Room 15' the following items matching 'Electrical Safety Testing Required' are in proximity: 'Asset 12334 Conference Phone', 'Asset 12245 LCD Projector', 'Asset 34567 Meeting Room PC'. All items are recorded as having passed electrical safety testing in the last 6 months."

Similarly, if a transmitter 3 were provided in a mobile handset user's vehicle, the mobile handset (with a receiver 5) could be configured to not allow ringing of the handset while the mobile terminal is in the vehicle (or at least while the engine of the vehicle is running). Instead, incoming calls would be diverted to the user's voicemail box, for retrieval later, when it is safer to do so.

The ability to identify the location of a mobile handset could also provide other additional functionality. For example, by provision of respective transmitters 3 in different rooms of a user's home, the mobile handset (with a receiver 5) could be configured to perform different special functions in each room. Within the user's living room, the infrared transmission facility of the mobile handset could be automatically configured to allow the mobile handset to operate as a remote control for a television; whereas, when the mobile terminal is identified to be in the kitchen, the infrared or Bluetooth transmission facility of the mobile terminal could be used to control some kitchen appliance.

Automatic configuration of (phone) applications could be performed as follows:

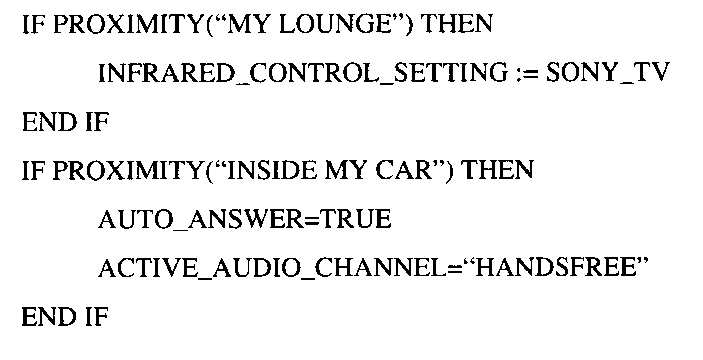

These applications are, of course, described only by way of example, and alternatives thereto will be envisaged by those skilled in the art.

Of course, it should be appreciated that the receiver 5 could be incorporated in devices other than mobile handsets.

Although the transmitters 3 may be a stand-alone device that is fixed in position in a room, the transmitter 3 may also be a portable or mobile device. For example, the mobile handset might incorporate a transmitter 3 (as well as a receiver 5). The microphone 11, signal converter 12 and loudspeaker/transducer 20 of the transmitter 3 (shown in Figure 2) might advantageously correspond to those elements already provided in the conventional mobile handset. The additional modules 13 to 22 can be implemented in the mobile handset by software or hardware.

It may be advantageous for a mobile handset to incorporate a data transmitter 3 as this would allow a receiver 5 to determine when it was in proximity to the mobile terminal. This would, for example, allow all the attendees at a meeting, who had mobile terminals with a transmitter 3 and receiver 5, to automatically record the presence of the other attendees and broadcast their presence to the other attendees. If the meeting room also contained a transmitter 3, each of the attendees could automatically record the location of the meeting.

The data received from the transmitters 3 by the receiver 5 could be processed by a range of Applets developed and downloaded to the relevant receiver 5.

Various other applications for the limited range receiver 3 and/or transmitter 5 are also envisaged, for example:

Room charging system: a receiver 5 in a meeting room may record the identity of those using a meeting room (using data broadcast from their respective transmitters 3 - typically in their mobile handsets), and charges may be rendered to the attendees on the basis of the identification data present in the data block transmitted by their transmitters 3.

Room preferences system: a reader in a room may note who is in a room and may adjust the room environment according to their preferences. For example, the air conditioning may be set to a preferred temperature and/or the audio-visual apparatus may be set according to the preferences of the users.

Restaurant preference system: a receiver 5 installed at each table in the restaurant (which might have a shorter transmission range than those in the other embodiments described thus far) might determine each diner's preferences according to data transmitted from their transmitter 3 and may automatically generate an electronic menu for each diner in accordance with the diner's preferences transmitted by their transmitter 3.

Ticketing applications: a receiver 5 on a transport vehicle or in an entertainment venue could record the identity of each of the transmitters 3 present in the vehicle/venue for charging purposes.

Tourist information: this is an outdoor application of the invention. When a tourist comes in proximity to a place of interest, the data block transmitted by their transmitter 3 will be detected by the receiver 5 at the place of interest. The transmitter 3 associated with the place of interest may then transmit information to the receiver 5 of the user's mobile terminal about the place of interest. Alternatively, the transmitter at the place of interest may transmit a URL to the receiver 5 of the user's mobile terminal, which allows them to download information about the place of interest using their terminal WAP or web browser.

Street furniture management: this is another outdoor application. Cable and telecommunications cabinets could be equipped with a transmitter 3 to allow identification by a service engineer provided with a receiver 5. This might, for example, allow the maintenance engineer to automatically download maintenance data stored for the cabinet and transmitted by the cabinet's transmitter 3.

Buried infrastructure management: this is a further outdoor application. Information posts marking underground assets (such as cables or pipes) may contain a transmitter 3 which allows retrieval by an appropriate receiver 5 of relevant information about the cable or pipe. Such a transmitter may, for example be solar powered - which is particularly advantageous if the cable or pipe is in a remote location.

A typical range for a transmitter will be six metres non-line-of-sight transmission, and capable of being received after passing through the human body and furniture obstacles. However, the transmitter will be substantially constrained by building partitions formed of glass, fibre board, plasterboard, structural wood, brick or metal.

When data is repeatedly transmitted by a transmitter 3, this will typically be transmitted in a burst on average every ten seconds. Preferably, the data will be transmitted with a low duty cycle (for example, preferably less than one per cent). That is, for a given time period, data from the transmitter (as opposed to the noise-like signal) is transmitted for only one per cent of the time. This is advantageous in the event that there are a multiplicity of transmitters 3 in a particular area. It reduces the likelihood that any two transmitters will transmit data at the same time (which might render it impossible or difficult for the data to be interpreted). The duty cycle may be randomised (that is, the interval between which the data is transmitted by each transmitter may vary, so that even if two transmitters do simultaneously transmit a data block, this will not occur repeatedly.

The transmitted data may be encrypted using a key or security code, and a mechanism is then provided to allow the authorised receivers to be provided with a key to decrypt the encrypted data blocks. Each data block is preferably provided with a sequence number.

In the embodiment described above, where the transmitter 3 is associated with a particular room, that transmitter might transmit a room indicator code in its data block. That code itself may not enable the user of mobile terminal to identify the room. A database, accessible by a cellular or mobile telecommunications network may be provided that allows the user to obtain the room identity by submitting the received code. The user may have to make a payment to receive the room identification data.

As an alternative to the transmitter 3 transmitting a code, the transmitter may make its identity public. The transmitter's data may be made public to all receivers 5, or only to trusted receivers. The data to be made public may be as follows:
Transmitter type: A
Last Modified: xx.yy.zz
Class: [Fixed|Mobile]
Category: [Room|Item|Person|Animal|...]
Short Name: [20 Chars]
Description: ["Descriptive Text"]
URL of supplementary data

Various modifications or enhancements to the transmitters 3 are possible, examples of which are briefly discussed below.

Caching of information: In the arrangement described earlier, where the transmitter 3 provides a room indicator code, which has to be provided to a database in order to provide meaningful information regarding the identity of a room, the receiver 5 may be provided with the facility to cache the room information for a particular code, so that the database need not be accessed each time that the same code is received. The room identification data may have a particular lifetime or validity date that is transmitted to the receiver 5 from the database together with the room identification data.

Erosion of network traffic over time: by cycling room indicator codes or using only limited cache information, the requirement for user's with receivers 5 to access the database to obtain room identity date will be maintained.

Privacy of transmitters: as indicated above, each transmitter is advantageously provided with a unique ID that is transmitted as part of the data block. To enhance security, each transmitter 3 may cycle through a predetermined number of IDs (for example, 256), and this would restrict the ability of unauthorised users to associate a transmitter with an object, as users would have to receive and associate all the predetermined IDs used by the transmitter with the room or object.

High security applications: in high security applications, continuously changing room indicator codes/or other ID codes) could be used, although this would make access to the database more difficult and expensive.

The use of varying room indicator codes (or other IDs) over time, makes it difficult or impossible for a transmitter to be "spoofed" by recording its output and replaying it elsewhere.

An advantage of the audible transmitter/receiver arrangement described is that it is not necessary to survey an area or building before the transmitter/receiver arrangement can operate satisfactorily. This should be contrasted with a GPS-based system, in which GPS readings would need to be taken and recorded for various locations for the system to operate correctly.

## Claims

1. A transmitter device (3) for transmitting data by means of an audible sound wave, the device comprising means for receiving the data to be transmitted (21,16); means (11,12) for measuring the ambient noise level; means (14,15,17,18,19) for producing a sound wave that is modulated by the data and adjusted to unobtrusive with respect to the ambient noise level; and means (20) for transmitting the sound wave.

2. The device of claim 1, wherein the amplitude of the transmitted sound wave is such that the sound wave is generally only perceptible in a room in which the apparatus is present.

3. The device of claim 1 or 2, wherein the sound wave is generated such that it is perceived as noise.

4. The device of claims 1,2 or 3, wherein the sound wave primarily creates substantially pink noise.

5. The apparatus of claim 1,2,3 or 4, wherein the data is transmitted by code spreading in frequency and/or time.

6. The device of any one of claims 1 to 5, wherein the sound wave is generated such that it is imperceptible when the data is transmitted therein.

7. The device of any one of claims 2 to 6, wherein the data is indicative of the identity of the room.

8. The device of any one of claims 1 to 7, wherein the measuring means (11,12) measures the ambient sound level at each of a plurality of frequency ranges, and wherein the sound producing means (14,15,17,18,19) produces the sound wave such that the relative amplitude of each of the frequency ranges corresponds to that of the ambient sound.

9. The device of any one of claims 1 to 8, wherein data comprises a pointer to a location at a remote database, which enables data stored at that location to be retrieved.

10. A device for receiving data transmitted by means of an audible sound wave that is unobtrusive with respect to the ambient noise level, the device comprising means for receiving the sound wave and means for extracting the data therefrom.

11. A mobile or cellular communications terminal adapted for receiving data transmitted by means of an audible sound wave that is unobtrusive with respect to the ambient noise level, the device comprising means for receiving the sound wave and means for extracting the data therefrom.

12. A telecommunication system including a transmitter device according to any one of claims 1 to 9 and a receiver device according to claim 10 and/or a terminal according to claim 11.

13. A method for transmitting data by means of an audible sound wave, the method comprising receiving the data to be transmitted, measuring the ambient noise, and producing a sound wave that is modulated by the data and adjusted to be unobtrusive in respect of the ambient noise level; and transmitting the sound wave.
